# EUROPEAN PATENT SPECIFICATION

(11) **EP 4 399 060 B1**
(45) Date of publication and mention of the grant of the patent: **23.04.2025**
(21) Application number: 22789246.0
(22) Date of filing: 09.09.2022
(51) Int. Cl.: B25J 5/02, B25J 15/00, B25J 21/00

(54) **GRIPPER AND AUTOMATED STORAGE SYSTEM**
GREIFER UND AUTOMATISIERTES LAGERSYSTEM
PINCE ET SYSTÈME DE STOCKAGE AUTOMATISÉ

(30) Priority: 10.09.2021 FI 20215950
(43) Date of publication of application: 17.07.2024
(73) Proprietor: Agora Networks Oy, 00580 Helsinki (FI)
(72) Inventor: MÄKELÄ, Juha, 00580 Helsinki (FI); TAMMI, Pasi, 00580 Helsinki (FI)
(74) Representative: Laine IP Oy
(86) International application number: PCT/FI2022/050609
(87) International publication number: WO 2023/037055

(56) References cited:
- WO-A1-2020/161385
- DE-A1- 102019 211 245
- DE-U1- 9 206 394
- US-A1- 2005 285 001
- US-A1- 2016 059 421
- US-B2- 10 639 800

## Description

### FIELD

The present disclosure relates to devices for receiving, storing, and dispensing items as well as to methods for producing such devices or components thereof. In particular, the present disclosure relates to automated systems for storing articles, individually or in orderly arrangement, in warehouses or magazines.

### BACKGROUND

With commerce moving ever more deeply and broadly online, the parcelled delivery of goods to the consumer has become the subject of great development. Typically, the item purchased online is delivered to the residence or place of employment of the consumer according to the order details. There are, however, problems associated with timing the receipt and delivery of the purchased item between the courier and the consumer. It is very common that the consumer is not available for receipt upon feasible delivery time or vice versa. The same problem is prevalent also in inter-consumer transactions. Several solutions have therefore been developed for storing the items in decentralized automated magazines that the items are delivered to and where item may be retrieved by the recipient at a convenient point in time. Such automated magazines are commonly provided with sophisticated user interfaces and backend systems that ensure that the person retrieving the parcel is duly notified of the availability of the parcel and that the person is entitled to access the parcel.

Conventional automated storage systems require relatively complex and precise componentry to work, including sophisticated sensors, machine vision, etc. to manipulate the containers used to hold the items inside the enclosure. It is therefore a challenge to design an automated storage system that can be made and maintained with relatively simple components that are suitable for mass production and servicing all around the world with a varying degree of expertise in robotic apparatuses.

US 10 639 800 B2 discloses a gripper for a robot of an automated storage system.

### SUMMARY OF THE INVENTION

The invention is defined by the features of the independent claim. Some specific embodiments are defined in the dependent claims.

According to a first aspect of the present disclosure, there is provided a gripper for a robot of an automated storage system. The gripper features a solitary fork, which comprises a body with two opposing ends. The fork also features two prongs fixed to the opposing two ends of the body. The fork further includes an elevated lip, which extends from the body between the prongs. The first prong, the second prong and the lip each comprise an engaging edge. The engaging edges form a trilateral gripping interface. The gripper comprises no moving parts. The engaging edges are aligned with each other and extend beyond the body in a height dimension. The trilateral gripping interface is configured to occupy a gripping space formed under a rim of a prismatic container.

According to a second aspect of the present disclosure, there is provided an automated storage system having an enclosure and a plurality of containers contained in the enclosure for storing the items. Each one of the containers has a base, which extends across an area that has a center point and an imaginary center axis extending through the center point. Each one of the containers has a casing with a bottom end connected to the base and a top end opposing the bottom end and defining an opening for accessing the container. The casing extends from the base in a direction having a component parallel to the center axis. Each one of the containers has a rim, which extends from the second end of the casing away from the center axis. Each one of the containers also has a bottom-facing skirt, which extends from the rim. A gripping space is formed between the casing, rim, and skirt of the container. A shelfless support structure is contained in the enclosure for storing a plurality of containers. The shelfless support structure has a plurality suspenders. Each one of the suspenders has a body having a height in a first Cartesian dimension, which is defined between a top end and a bottom end and a width in a second Cartesian dimension. Each one of the suspenders has a lip for introduction to respective gripping spaces of the plurality of containers. The lip extends from the top end of the body above and towards one side thereof. Each one of the suspenders has a plurality of notches provided to the lip for accommodating respective skirts of the plurality of containers. A robot is provided to the inside of the enclosure for moving the containers between the port and the support structure. The robot has an articulated arm with a distal end. The system also comprises a gripper according to the first aspect disposed at the distal end of the articulated arm of the robot for gripping one of the plurality of containers by the gripping space.

Various embodiments of the first or second aspect may comprise one feature or more than one feature from the following itemized list:
- the opposing ends of the body comprise a first end and a second end, which opposes the first end along a transversal dimension;
- the two prongs are formed by a first prong, which is fixed to and which extends from the first end of the body along a longitudinal dimension, and a second prong, which is fixed to and which extends from the second end of the body along the longitudinal dimension;
- the longitudinal dimension is orthogonal in respect to the transversal dimension;
- a container space is defined by the body, first prong, and second prong;
- the lip is provided between the first end and second end of the body;
- lip extends from the body in a height dimension, which is orthogonal in respect to the longitudinal dimension and transversal dimension;
- the gripping space is defined by a casing, a rim, and by a skirt of the container;
- the rim extends orthogonally from the casing;
- the skirt extends orthogonally from the rim and in parallel to the casing;
- the gripper comprises an attachment interface fixed to the body for attachment to a robot arm;
- the gripper comprises a first transversal gap between the lip and the first prong;
- the gripper comprises a second transversal gap between the lip and the second prong;
- the first prong and second prong both extend between respective leading ends and trailing ends;
- the trailing ends of the first prong and the second prong both comprise a recessed section at the lip;
- the recessed section is lower in the height dimension compared to engaging edges for receiving a peripheral skirt of the container;
- at least one of the prongs comprises a replaceable contact member comprising the engaging edge;
- the contact member or the lip or both is/are made of a polymer material;
- the contact member or the lip or both is/are made of polyethylene;
- the automated storage system comprises a vertically extending track and a carrier provided movably to the track;
- the arm of the robot is attached at a proximal end to the carrier;
- the enclosure has a quadrilateral cross-section;
- the user interface is provided on a first side of the enclosure;
- the robot is provided on a second side of the enclosure opposing the first side;
- a first such support structure is provided on a third side of the enclosure;
- each one of the plurality suspenders comprises a shoulder for engaging casings of the plurality of containers;
- the shoulder extends from the bottom end of the body below and towards said one side thereof;
- the container is generally prismatic,
- the rim and skirt extend around the entire top end of the casing.

Considerable benefits are gained with aid of the novel proposition. A relatively simple gripper may be constructed for gripping a container from a gripping space that is formed under a skirt edge of the container. On the other hand an equally simple shelfless support structure may be used to house the container. Accordingly, an automated storage system may be provided with relatively simple components that are suitable for mass production and servicing thus making the system relatively robust.

Further benefits are gained with particular embodiments which are described in greater detail here after.

### BRIEF DESCRIPTION OF THE DRAWINGS

In the following certain exemplary embodiments are described with reference to the accompanying drawings, in which:
- FIGURE 1: illustrates a perspective view of an automated storage system in accordance with at least some embodiments;
- FIGURE 2: illustrates a perspective sectioned view of the automated storage system of FIGURE 1;
- FIGURE 3: illustrates a perspective isolation view of a gripper in accordance with at least some embodiments;
- FIGURE 4: illustrates a perspective view of the gripper of FIGURE 3 in a disengaged state with respect to a container;
- FIGURE 5: illustrates a perspective view of the gripper of FIGURE 3 in an engagement state with respect to a container;
- FIGURE 6: illustrates a side elevation view of FIGURE 5;
- FIGURE 7: illustrates a side elevation view of the gripper of FIGURE 3 engaged with the container, which is disengaged from the suspender, and
- FIGURE 8: illustrates a perspective view of a gripper according to an alternative embodiment in a disengaged state with respect to a container.

### EMBODIMENTS

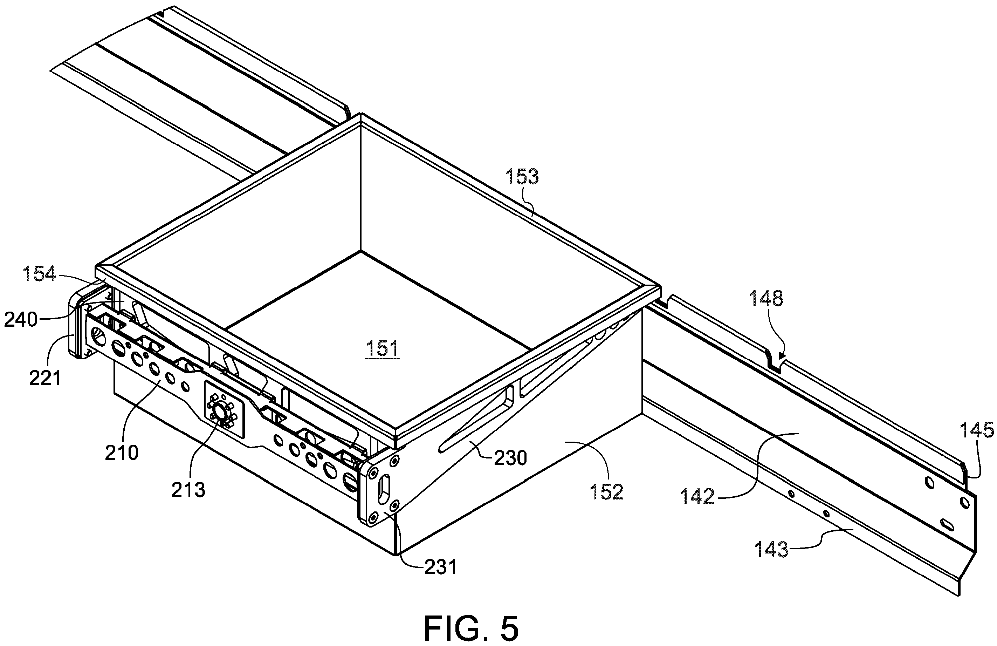

In the present context, the various pieces of an exemplary automated storage system are discussed with reference to two dimension systems. In the first dimension system features of a gripper are discussed with reference to three Cartesian dimensions, namely a longitudinal dimension L, a transversal dimension T, and a height dimension H (FIG. 5). In the second dimension system features of a suspender are discussed with reference three Cartesian dimensions, namely a first Cartesian dimension X, a second Cartesian dimension Y, and a third Cartesian dimension Z. In the present discussion the transversal dimension T and the first Cartesian dimension X are interchangeable. So are the height dimension H and the second dimension Y as well as longitudinal dimension L and third dimension Z, respectively.

In the present context, the expression "solid fork" relates to a gripper fork which includes no mechanical moving or manipulated parts, such as latches, for selectively gripping a container.

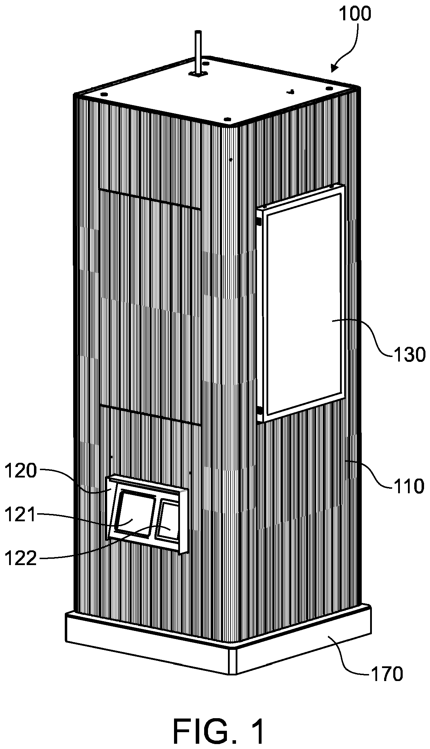

FIGURE 1 illustrates an automated storage system 100 in accordance with at least some embodiments of the present invention. The storage system 100 is a stand-alone apparatus that is constructed to receive and dispense parcels based on inputs from a user through a user interface 120 and to store the parcels inside an enclosure 110. The user interface 120 includes a selectively openable opening 121 for the deposit and retrieval of items and a human-machine-interface 122, such as a touch-pad, or a machine-machine-interface, such as a data channel, e.g. NFC, Bluetooth, etc., for communication with a terminal device of the user.

The enclosure 110 is generally prismatic and clad with a façade. The façade may take the form a layer of protective substance, such as paint or a rubber-based sealant, or constructional elements, such as panels. In the example of FIGURE 1 the façade includes a host of profiles attached to the enclosure 110. The profiles have an undulating outer surface for improved strength. The profiles are preferably made from a weather-resistant material such as aluminium or an alloy including aluminium, particularly anodized aluminium. The automated storage system 100 may also host other componentry, such as displays 130, antennas (not illustrated in the drawings), public service announcement equipment (not illustrated in the drawings), etc. The enclosure 110 may be installed on a footing 170, such as a concrete slab.

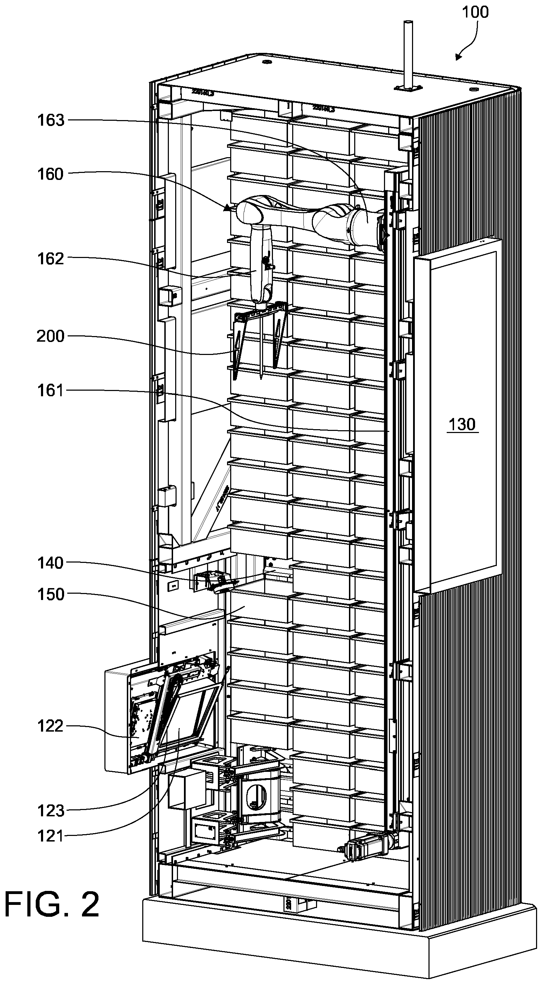

FIGURE 2 reveals the inside of the enclosure 110. The enclosure 110 includes a shell, which is clad by the afore-mentioned façade. The enclosure 110 houses a shelfless support structure 140 for supporting a plurality of containers 150, preferably a large number of containers 150 for storing a respective large number of individual items, a robot 160, and the user interface 120. The enclosure 110 also houses a host of other auxiliary componentry, such as power units, control circuits, etc.

In the illustrated example the enclosure 110 features a generally prismatic shell with four lateral sides, a bottom side, and a top side. The user interface 120 is provided on one lateral side of the enclosure 110. The robot 160 is provided to run on a vertically extending track 161, which is provided on an opposing lateral side in respect to the user interface 120. The track 161 features a linear guide rail that guides a robot 160 up and down the inner space of the enclosure via a carrier 163. The robot 160 features an arm 162, which is articulated such to provide reach into and between all storage positions on the support structure 140. For this purpose the proximal end of the arm 162, which is attached to the carrier 163, may include an articulated joint. The exemplary arm 162 of the embodiment of FIGURE 2 features three articulating joints and six axes. A gripper 200 is provided to the distal end of the arm 162 to selectively grab, hold, and release a container 150. The details of the gripper 200 are discussed in here after.

The shelfless support structure 140 features suspenders 141 provided on top of each other on a third or a third and fourth lateral side of the enclosure, e.g. on both sides in respect to the user interface 120. The suspenders 141 take the form of a simple profile, which is designed to cooperate with the enclosure 150 to suspend the enclosure 150 from a bordering rim of the enclosure in contrast to conventional shelves that support the enclosures from below. The details of the suspenders 141 are discussed in here after.

FIGURE 2 also shows the construction of the user interface 120. The user interface 120 features a frame, which is fitted into a receptive opening in the enclosure 110. The frame has a profile, which extends through the shell and façade and provides for a lipped recess for a selectively closable opening and an input and output (i/o in short) device 122. The i/o device 122 may feature a touch screen or other interactive terminal for communication with the user. The user may command the system by entering the details of the stored item for retrieval or depositing purposes. Alternatively or additionally the data i/o device 122 may feature a data interface, such as NFC, Bluetooth, WIFI, etc., for communication with a terminal device of the user for the same purposes.

The opening may be selectively opened and closed by a hatch 121. The hatch mechanism includes a slide mechanism that carries the hatch. The slide mechanism 122 may simply take the form of a track for holding the hatch 121, which may be a planar plate, in a sliding fashion. The hatch 121 may be manipulated between an open and closed state with an extender which holds the distal end of the hatch 121 and which is adapted to be moved along the track of the slide mechanism. By moving the extender between a bottom and top position, the hatch 121 is moved respectively between a closed state, in which the hatch 121 closes the opening of the user interface 120, and an open state, in which the hatch 121 clears the opening. The slide mechanism is preferably tilted into the enclosure so that the hatch 121 is slid on the inside of the shell 111 above or below the opening of the user interface 120. The hatch 121 is housed in profile 123, against which the containers 150 are pressed for deposit or retrieval of items. The profile 123 may include a relatively soft seal for improving the contact between the profile 123 and the rim of the container 150.

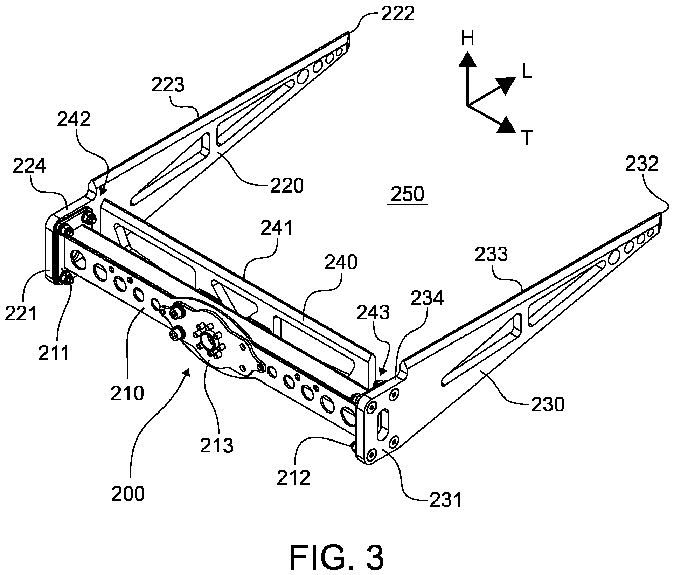

As will become apparent form these FIGURES, the gripper 200 is designed to stay engaged to the container 150 during loading and unloading of the container 150 through the user interface 120. To facilitate that, the hatch 121 is configured to slide past the rim of the container 150, whereas the gripper 200 is configured to grip the container 150 from a side such to leave the plane of the top rim of the container 150 unoccupied. Accordingly, the user interface 120 is particularly convenient to use. Firstly, the backward tilt angle of the profile 123 promotes ensuring that the item is placed on the bottom of the enclosure 150 to mitigate the risk of the item being caught in the slide mechanism, i.e. under the hatch 121, during closing. Secondly, by matching the profile 123 of the opening of the user interface 120 with the rim of the container 150, the inner volume of the container 150 may be varied by varying the depth of the container, whereby the same gripper may be used 200 to manipulate containers 150 of various sizes. The inward tilt angle in the slide mechanism allows for such variance in container depth. One may readily appreciate the possibility of replacing the container 150 shown in FIGURE 3 with a container having the same footprint and thus rim dimensions but a larger depth (not shown in the FIGURES).

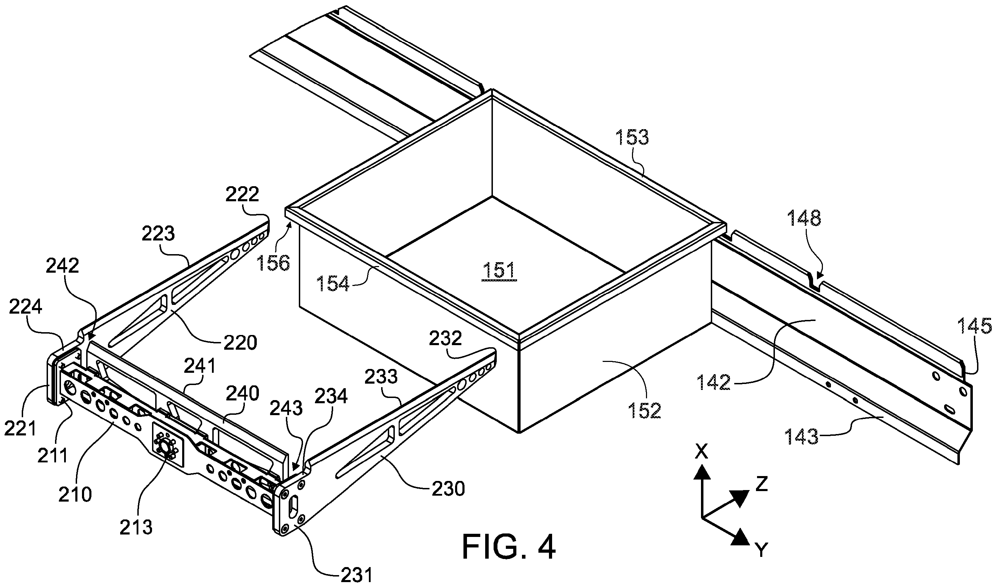

Turning now to FIGURES 3 to 6, wherein FIGURE 3 shows the gripper 200 in isolation and FIGURES 4 to 6 show the interaction between the gripper 200 and the container 150 as well as the interaction between the container 150 and the suspender 141. The arm of the robot has been omitted from FIGURES 3 to 6 for the sake of clarity.

Let us first study the container 150. As shown in the FIGURES, the enclosure 150 exhibits a generally prismatic shape. The base 151 of the enclosure 150 is quadrilateral, specifically quadrangular, but naturally other shapes are also foreseeable. A casing 152 extends from the base 151 from all four sides. The casing 152 includes four side walls that are oriented in a right angle in respect to the base 151. The base 151 extends across an area a center point and an imaginary center axis that extends through the center point. The casing 152 therefore extends from the base 151 in a direction having a component that is parallel to the center axis. It is preferred that the casing 152 extends in a direction that is very close to parallel in respect to the center axis. While slight deviations from the parallel extension are possible, the prismatic shape is preferred for volumetric efficiency. The casing 152 may in other words have a slight draft for promoting detachment from a mold, if the enclosure 150 is a cast product. A suitable draft angle may be in the range of one to five degrees, particularly three degrees. It is, however, to be noted that the component of the extension that is parallel to the center axis is dominant. While the side walls of the casing 152 are preferably planar, curved, rounded, chamfered, or otherwise modified shapes are also foreseen. The container 150 may also be produced from a sheet of metal, such as stainless steel or an aluminum alloy, which is cut to form, bent to form the container shape, and then laser welded shut along the seams.

The base 151 is planar, whereby the imaginary center axis is a normal of the base 151.

The container 150 is symmetrical about two mutually orthogonal symmetry axes extending across the container 150 when viewed along the center axis.

The top end of the casing 152 that is at the opposing end of the bottom end, which is attached to the base 151, delimits the opening providing access into the inner volume of the container 150. The top end includes a rim 153. The rim 153 extends outward from the top end, i.e. away from the center axis of the container 150. The rim 153 need not extend perpendicularly in respect to the center axis as long as the extension includes a component of extension that is perpendicular in respect to the center axis.

The container 150 further features a skirt 154 which extends from the rim 153. The purpose of the skirt 154 is to create a gripping space 156 under the rim 153 so as to hold on to a suspender 141 of the support structure 140. The skirt 154 faces the bottom of the container 150 meaning that it extends in a direction which has a dominant component parallel to the center axis of the container 150. According to the illustrated embodiment the skirt 145 extends parallel to the casing 152, i.e. in a right angle in respect to the rim 153. Accordingly, the skirt 154 forms a peripheral gripping space with the casing 152 and the rim 153.

FIGURES 4 to 6 show the container 150 being suspended by a suspender 141 of the support structure 140. The suspender 141 is preferably a simple profile that is attached to the inner surface of the shell 111 of the enclosure 110. The profile is designed to allow for permanent attachment to the shell 111 and repetitively removable attachment to the container 150. To facilitate the permanent attachment, the profile features a body 142 which extends laterally across the suspender 141 and which is placed centrally along the vertical extension of the suspender 141. The body 142 is preferably planar.

To facilitate the removable attachment to the container 150, the suspender 141 features a vertically extending lip 145 placed above the body 142 in the vertical dimension and displaced on one side thereof in the depth dimension to provide a gap between the lip 145 and the shell 111 of the enclosure 110 that supports the suspender 141. The gap is large enough to account for the thickness of the skirt 154. The terminal end of the lip 145 is preferably rounded to promote smooth engagement with the container 150. The lip 145 is designed to enter into the gripping space 156 and to support the container 150 from the rim 153. The inner surface of the skirt 154 rests against the lip 145.

There is a transition 147 between the body 142 and the lip 145 connecting the two diagonally.

For the sake of keeping the container 150 in an upright orientation during storage, the suspender 141 preferably includes a shoulder 143 placed below the body 142 in the vertical dimension and displaced on said one side thereof in the depth dimension to support the casing 152 of the container 150 during storage. The shoulder 143 is pronounced from the body 142 enough to account for the depth of the rim 153 of the container 150.

The suspender 141 further includes notches 148 provided along the lip 145 to receive the skirt 154 of the containers 150. The notches 148 are dimensioned to facilitate the skirts 154 of two adjacent containers 150 being placed side-to-side on the suspender 141 with a small clearance between the two.

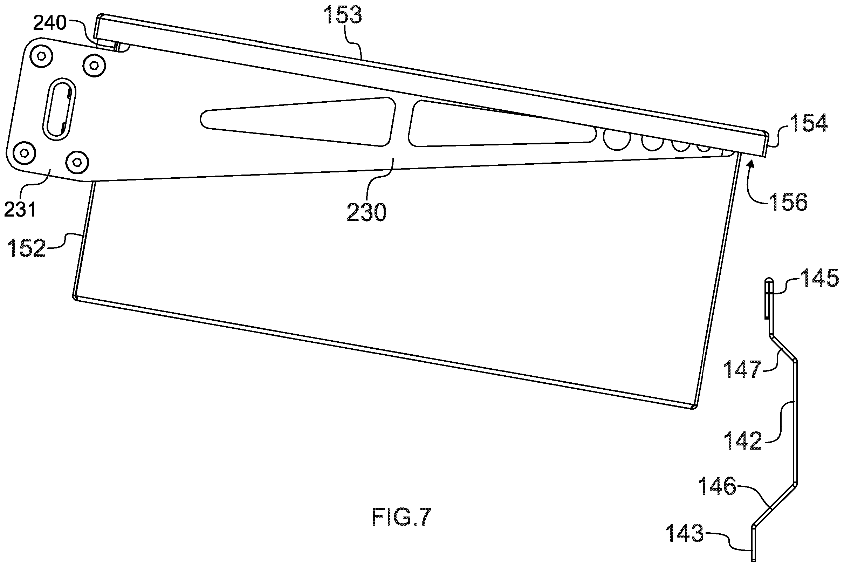

FIGURES 4 to 6 show the container 150 being approached by, engaged with, and locked to the gripper 200 of the robot 160. FIGURE 7 shows the container 150 being lifted of or lowered onto the suspender 141 by the gripper 200.

The gripper 200 has a shape of a general C shape and is configured to engage three sides of the generally prismatic container 150. The gripper 200 has a body 210 which is designed to form a connection between the robot arm 162, the container 150, and the actuating elements of the gripper 200. The body 210 is a transversally extending piece which is aligned with the side of the container 150 that opposes the suspender 141. The body 210 comprises an elevated lip 240, which is designed to engage with the bottom edge of the skirt 154 for supporting the container 150.

Connected to a first transversal end 211 of the body 210 is a first prong 220, which, in turn, extends there from along the longitudinal dimension L. Correspondingly, a second prong 240 extends from a second transversal end 212 of the body 210 generally parallel to the first prong 220. The first prong 220 and/or the second prong 230 extend orthogonally in respect to the body 210. In the present context the expression orthogonal may be understood to include 90 degrees plus minus 15 degrees. The purpose of the prongs 220, 230 is to be inserted into respective gripping spaces 156 on opposing sides of the container 150. Accordingly, the top edges of the prongs 220, 230 feature engaging edges 223, 233 that are designed to fluently engage and disengage the gripping space. The engaging edges 223, 233 may, for example, comprise a chamfer, rounding, or an otherwise relieved shape or shapes to facilitate engagement and disengagement. The lip 240 preferably includes a similar engaging edge 241 which is aligned with the engaging edges 223, 233 of the prongs 220, 230 in the height dimension H.

To facilitate the attachment of the body 210 to the prongs 220, 230, flanges are provided to the first and second end 211, 212 of the body 210, through which flanges the body 210 is attached to the prongs 220, 230 with affixers, such as bolts, rivets, etc.

The distance between the prongs 220, 230 defines the width of the gripper 200 in the transversal dimension T. The prongs 220, 230 extend between mutually opposing leading ends 222, 232 and trailing ends 221, 231. The extension of the prongs 220, 230 defines the depth of the gripper 200 in the longitudinal dimension L. The dimensions of the gripper 200 are matched with those of the container 150 so as to create a container space 250 between the body 210 (or lip 240) and prongs 220, 230 for receiving the container 150 there to. In other words, the casing 152 of the container 150 fits into the container space 250.

The lip 240 is provided to the body 210 to extend therefrom in the height dimension H. The lip 240 extends in the transversal dimension T between the prongs 220, 230. The purpose of the lip 240 is to be inserted into the gripping space 156 of the container 150 on a side, which is between the sides that accommodate the prongs 220, 230 and which opposes the side that engages the suspender 141.

The trailing ends 221, 231 of the prongs 220, 230 include recessed portions 224, 234 for receiving the skirt 154 of the container 150. Basically the recessed portions 224, 234 may be provided with simple cutouts to reduce the height of the trailing ends 221, 231 of the prongs 220, 230.

Gaps, particularly a first transversal gap 242 and a second transversal gap 243, may be left between the lip 240 and the first prong 220 and between the lip 240 and the second prong 230, respectively. The purpose of the gaps is to receive the skirt of an asymmetrical container with a narrowed rear end (not illustrated).

An attachment interface 213 is provided to the body 210 on the rear side, i.e. the side opposing the container space 250, for attachment to the robot 160. The attachment interface 213 may be any commercially available coupler to known robotic arms.

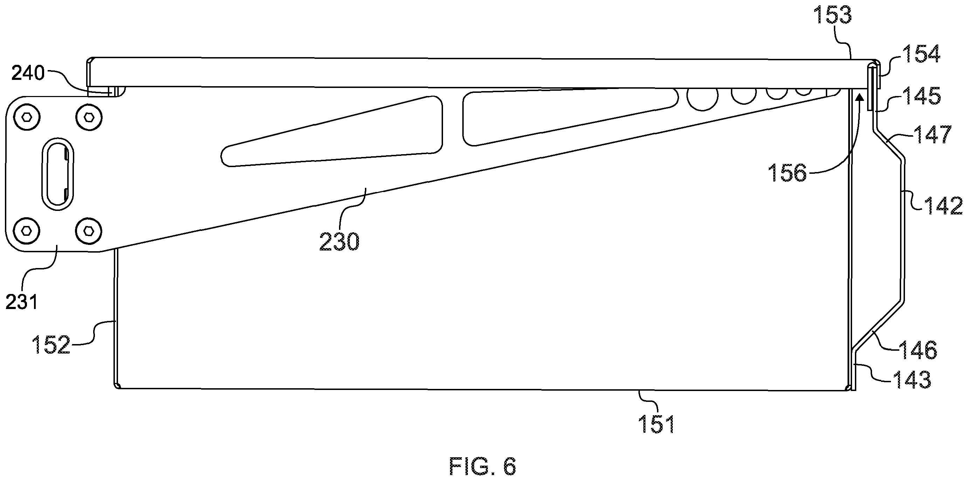

As can be seen, gripping of the container 150 with the gripper 200 requires no moving parts for securing the container 150 to the gripper 200. To grab a container 150, the gripper 200 is brought into the proximity of the container (FIG. 4) with the prongs 220, 230 aligned with the opposing sides of container 150 and the engaging edges 223, 233, 241 below the skirt 154. With the prongs 220, 230 flanking the container 150, the gripper 200 is moved in the longitudinal dimension towards the suspender 141 until the lip 240 is aligned with the gripping space 156 (FIG 5). A small upwards movement will slip the engaging edges 241, 223, 233 into the respective gripping spaces 156, whereby the skirt 154 is accommodated by the recessed portions 224, 234 (FIG. 6).

Once gripped, the container 150 may be removed from or suspended to the suspender 141 by lifting the skirt 154 of the lip 145 of the suspender 141. The approach to and departure from the suspender 141 may involve a slight tilting of the container 150 shown in FIGURE 7.

The described attachment interface between the container 150, suspender 141, and the robot 160 provides for a simple and convenient way of manipulating a large number of containers in an automated storage system 100. Upon deposit of an item into the system 100, the user summons a container 120 to the user interface 120 by entering a respective command through the i/o device 122. The robot 160 is run to a vacant container 150 (FIGURE 5A) into engagement with the container 150 such that the engaging edges 223, 233, 241 are inserted into the gripping space 156.

With the container 150 secured to the gripper 200, the robot 160 lifts the container 150 off the suspender 141 enough for the skirt 154 to clear off notches 148. The container 150 is then transported by the robot 160 to the user interface 120, where the rim 153 of the container 150 is aligned with the profile 123 of the user interface 120. With the container 150 in place, the hatch 121 is opened.

After the user has inserted the item to be stored into the container 150, he gives a command through the i/o device 122 to confirm that the item is ready for storage. The hatch 121 closes. Afterwards, the robot 160 returns the container to the same suspender 141 or to another vacant position on the support structure 140. The robot 160 then positions the container 150 above the vacant position, aligns the skirt 154 with the receptive notches 148, and lowers the container 150 into place. The gripper 200 is then retracted from the container 150, where after the robot 160 may be run to a waiting position or to serve another deposit or retrieval process.

The embodiment shown in FIGURES 1 to 7 features a gripper 200 with the prongs 220, 230 being made from single pieces. In the embodiment of FIGURES 1 to 7 the prongs 220, 230 and lip 240 are made of metal, such as steel, aluminum, aluminum alloy, or a composite, and are replaceable *per se* with aid of the affixer interface between the prongs 220, 230, lip 240, and the body 210.

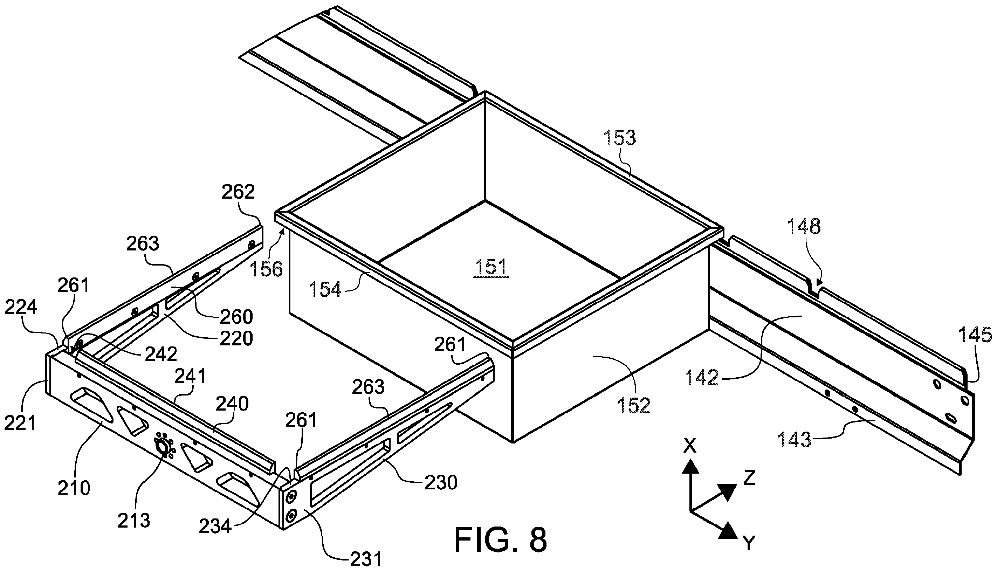

FIGURE 8 shows an alternative with replaceable contact members in respect to the prong. Firstly, the prongs 220, 230 both comprise a replaceable contact member 260 comprising the engaging edge for engaging the container 150. The contact member 260 is designed as a replaceable, sacrificial wear item that is preferably optimized for repetitive contact with the container 150. The contact member 260 is preferably a polymer piece, particularly of polyethylene. The material may be specifically PE1000 or have a polyoxymethylene (POM) base. Thermoplastic polymers are particularly suitable as foreseeable materials due to excellent wear properties and for providing only a modest amount of friction between the gripper 200 and the container 150. Slip is, in fact, preferable between the gripper 200 and container 150 to facilitate smooth engagement and disengagement. On the other hand, a polymer-based material will reduce the weight and cost of the gripper 200 compared to a fully metal construction. Finally, a polymer-based material, such as polyethylene, has the added benefit of being inherently weaker than metal, such as steel or aluminum or aluminum alloy. By constructing the contact member 260 of a material that is more prone to wear than the container 150 is, reliability of operation of the system may be ensured by replacing the contact members 260 on a regular basis instead of replacing the entire fleet of containers 150. Should the gripper 200 and container 150 collide due to an error, it is preferable to sacrifice the contact member 260 of the prong 220, 230 compared to the container 150 because the integrity of the gripper 200 may be monitored more easily than the container 150. According to an advantageous embodiment, the gripper 200 is provided with a sensor, such an accelerometer, for sensing impacts.

According to the embodiment shown in FIGURE 8, both prongs 220, 230 feature a replaceable contact member 260. The contact member 260 comprises, similarly to the prongs 220, 230 shown in FIGURES 1 to 7 a leading end 261, a trailing end 262, and an intermediate section 263 there between. The intermediate section 263 has an upper edge for insertion into the gripping space 156 of the container 150.

The embodiment of FIGURE 8 also features a similarly revised lip 240 made of a more wearable material than that of the container 150. Indeed, the lip 240 at the rear of the gripper may also be made of a polymer material, such as polyethylene or polyoxymethylene.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

| **No** | **Feature** | **No** | **Feature** |
|---|---|---|---|
| 100 | automated storage system | 163 | carrier |
| 110 | enclosure | 170 | footing |
| 120 | user interface | 200 | gripper |
| 121 | hatch | 210 | body |
| 122 | i/o device | 211 | first end |
| 123 | profile | 212 | second end |
| 130 | display | 213 | attachment interface |
| 140 | support structure | 220 | first prong |
| 141 | suspender | 221 | trailing end |
| 142 | body | 222 | leading end |
| 143 | shoulder | 223 | engaging edge |
| 144 | leg | 224 | recessed section |
| 145 | lip | 230 | second prong |
| 146 | transition | 231 | trailing end |
| 147 | transition | 232 | leading end |
| 148 | notch | 233 | engaging edge |
| 150 | container | 234 | recessed section |
| 151 | base | 240 | lip |
| 152 | casing | 241 | engaging edge |
| 153 | rim | 242 | first transversal gap |
| 154 | skirt | 243 | second transversal gap |
| 155 | tab | 250 | container space |
| 156 | gripping space | 260 | contact member |
| 160 | robot | 261 | trailing end |
| 161 | track | 262 | leading end |
| 162 | arm | 263 | engaging edge |

## Claims

1. A gripper (200) for a robot (160) of an automated storage system (100), comprising a solitary fork which comprises:
- a body (210) extending between two opposing ends (211, 212),
- a first prong (220) and a second prong (230) fixed to and extending from the respective two opposing ends (211, 212) of the body, and
- a lip (240), which extends from the body (210) between the first prong (220) and the second prong (230),
wherein:
- the first prong (220), the second prong (230), and the lip (240) each comprise an engaging edge (223, 233, 241, 263) and wherein
- the engaging edges (223, 233, 241, 263) form a trilateral gripping interface, wherein
- the gripper (200) comprises no moving parts and wherein
- the engaging edges (223, 233, 241, 263) are aligned with each other and extend beyond the body (210) in a height dimension (H), wherein the trilateral gripping interface is configured to occupy a gripping space (156) formed under a rim (153) of a prismatic container (150).

2. The gripper (200) according to claim 1, wherein:
- the opposing ends (211, 212) of the body (210) comprise a first end (211) and a second end (212), which opposes the first end (211) along a transversal dimension (T),
- the first prong (220) is fixed to and extends from the first end (211) of the body (210) along a longitudinal dimension (L), which is orthogonal in respect to the transversal dimension (T),
- the second prong (230) is fixed to and extends from the second end (212) of the body (210) along the longitudinal dimension (L),
- a container space (250) is delimited by the body (210), first prong (220), and the second prong (230), and wherein
- the lip (240) is provided between the first end (211) and second end (212) of the body (210), which lip (240) extends from the body (210) in the height dimension (H), which is orthogonal in respect to the longitudinal dimension (L) and transversal dimension (T).

3. The gripper (200) according to any one of the preceding claims, wherein the gripping space (156) is defined by:
- a casing (152),
- a rim (153), which extends orthogonally from the casing (152), and by
- a skirt (154), which extends orthogonally from the rim (153) and in parallel to the casing (152).

4. The gripper (200) according to any one of the preceding claims, wherein the gripper (200) comprises an attachment interface (213) fixed to the body (210) for attachment to a robot arm.

5. The gripper (200) according to any one of the preceding claims, wherein the gripper (200) comprises:
- a first transversal gap (242) between the lip (240) and the first prong (220) and
- a second transversal gap (243) between the lip (240) and the second prong (230).

6. The gripper (200) according to any one of the preceding claims, wherein:
- the first prong (220) and second prong (230) both extend between respective leading ends (222, 232) and trailing ends (221, 231),
- the trailing ends (221, 231) of the first prong (220) and the second prong (230) both comprise a recessed section (224, 234) at the lip (240), which recessed section (224, 234) is lower in the height dimension (H) compared to engaging edges (223, 233, 241) for receiving a peripheral skirt (154) of a container (150).

7. The gripper (200) according to any one of the preceding claims, wherein at least one of the prongs (220, 230) comprises a replaceable contact member (260) comprising the engaging edge (263).

8. The gripper (200) according to claim 7, wherein the contact member (260) or the lip (240) or both is/are made of a polymer material, particularly polyethylene.

9. An automated storage system (100) comprising:
- an enclosure (110) comprising a port for accessing the enclosure (110);
- a plurality of containers (150) contained in the enclosure (110) for storing items, each container (150) comprising:
∘ a base (151) extending across an area that has a center point and an imaginary center axis extending through the center point and
∘ a casing (152) with a bottom end connected to the base (151) and a top end opposing the bottom end and defining an opening for accessing the container (150), which casing (152) extends from the base (151) in a direction having a component parallel to the center axis,
- a shelfless support structure (140) contained in the enclosure (110) for storing a plurality of containers (150), the shelfless support structure (140) comprising a plurality of suspenders (141), which each comprise:
∘ a body (142) having a height in a first Cartesian dimension (X) defined between a top end and a bottom end and a width in a second Cartesian dimension (Y);
∘ a lip (145) configured to be introduced to respective gripping spaces (156) of the plurality of containers (150), the lip (145) extending from the top end of the body (142) above and towards one side thereof, and
- a robot (160) provided to the inside of the enclosure (110) for moving the containers (150) between the port and the support structure (140), the robot (160) comprising an articulated arm (162) with a distal end, wherein
- each container (150) comprises:
∘ a rim (153), which extends from the second end of the casing (152) away from the center axis, and
∘ a bottom-facing skirt (154), which extends from the rim (153), whereby a gripping space (156) is formed between the casing (152), rim (153) and skirt (154) of the container (150),
- each of the plurality suspenders (141) comprises a plurality of notches (148) provided to the lip (145) for accommodating respective skirts (154) of the plurality of containers (150), and wherein
- the automated storage system (100) comprises a gripper (200) in accordance with any one of the preceding claims disposed at the distal end of the articulated arm (162) of the robot (160) for gripping one of the plurality of containers (150) by the gripping space (156).

10. The automated storage system (100) according to claim 9, wherein:
- the automated storage system (100) comprises a vertically extending track (161) and a carrier (163) provided movably to the track (161), and wherein
- the arm (162) of the robot (160) is attached at a proximal end to the carrier (153).

11. The automated storage system (100) according to claim 9 or 10, wherein:
- the enclosure (110) has a quadrilateral cross-section;
- the user interface (120) is provided on a first side of the enclosure (110);
- the robot (120) is provided on a second side of the enclosure (110) opposing the first side, and wherein
- a first such support structure (140) is provided on a third side of the enclosure (110).

12. The automated storage system (100) according to any one of the preceding claims 9 to 11, wherein each one of the plurality suspenders (141) comprises a shoulder (143) for engaging casings (152) of the plurality of containers (150), the shoulder (143) extending from the bottom end of the body (142) below and towards said one side thereof.

13. The automated storage system (100) according to any one of the preceding claims 9 to 12, wherein the container (150) is generally prismatic.

14. The automated storage system (100) according to any one of the preceding claims 9 to 13, wherein the rim (153) and skirt (154) extend around the entire top end of the casing (152).

## Patentansprüche

1. Greifer (200) für einen Roboter (160) eines automatisierten Lagersystems (100), der eine einzelne Gabel umfasst, die umfasst:
- einen Körper (210), der sich zwischen zwei gegenüberliegenden Enden (211, 212) erstreckt,
- einen ersten Zinken (220) und einen zweiten Zinken (230), die an den jeweiligen beiden gegenüberliegenden Enden (211, 212) des Körpers fixiert sind und sich aus diesem erstrecken, und
- eine Lippe (240), die sich zwischen dem ersten Zinken (220) und dem zweiten Zinken (230) aus dem Körper (210) erstreckt,
wobei:
- der erste Zinken (220), der zweite Zinken (230) und die Lippe (240) jeweils eine Eingriffskante (223, 233, 241, 263) umfassen und wobei
- die Eingriffskanten (223, 233, 241, 263) eine dreiseitige Greifschnittstelle bilden,
wobei
- der Greifer (200) keine beweglichen Teile umfasst und wobei
- die Eingriffskanten (223, 233, 241, 263) miteinander ausgerichtet sind und sich in einer Höhenabmessung (H) über den Körper (210) hinaus erstrecken, wobei die dreiseitige Greifschnittstelle konfiguriert ist, um einen Greifraum (156) einzunehmen, der unter einem Rand (153) eines prismatischen Behälters (150) gebildet ist.

2. Greifer (200) nach Anspruch 1, wobei:
- die gegenüberliegenden Enden (211, 212) des Körpers (210) ein erstes Ende (211) und ein zweites Ende (212) umfassen, das dem ersten Ende (211) entlang einer Querabmessung (T) gegenüberliegt,
- der erste Zinken (220) am ersten Ende (211) des Körpers (210) fixiert ist und sich aus diesem entlang einer Längsabmessung (L) erstreckt, die in Bezug zur Querabmessung (T) orthogonal ist,
- der zweite Zinken (230) am zweiten Ende (212) des Körpers (210) fixiert ist und sich aus diesem entlang der Längsabmessung (L) erstreckt,
- ein Behälterraum (250) durch den Körper (210), den ersten Zinken (220) und den zweiten Zinken (230) begrenzt ist, und wobei
- die Lippe (240) zwischen dem ersten Ende (211) und dem zweiten Ende (212) des Körpers (210) bereitgestellt ist, wobei sich die Lippe (240) in der Höhenabmessung (H) aus dem Körper (210) erstreckt, die in Bezug zur Längsabmessung (L) und Querabmessung (T) orthogonal ist.

3. Greifer (200) nach einem der vorstehenden Ansprüche, wobei der Greifraum (156) definiert ist durch:
- ein Gehäuse (152),
- einen Rand (153), der sich orthogonal aus dem Gehäuse (152) erstreckt, und durch
- eine Schürze (154), die sich orthogonal aus dem Rand (153) und parallel zu dem Gehäuse (152) erstreckt.

4. Greifer (200) nach einem der vorstehenden Ansprüche, wobei der Greifer (200) eine am Körper (210) fixierte Anbauschnittstelle (213) zum Anbauen an einen Roboterarm umfasst.

5. Greifer (200) nach einem der vorstehenden Ansprüche, wobei der Greifer (200) umfasst:
- einen ersten Querspalt (242) zwischen der Lippe (240) und dem ersten Zinken (220) und
- einen zweiten Querspalt (243) zwischen der Lippe (240) und dem zweiten Zinken (230).

6. Greifer (200) nach einem der vorstehenden Ansprüche, wobei:
- der erste Zinken (220) und der zweite Zinken (230) sich beide zwischen jeweiligen vorderen Enden (222, 232) und hinteren Enden (221, 231) erstrecken,
- die hinteren Enden (221, 231) des ersten Zinkens (220) und des zweiten Zinkens (230) beide einen vertieften Abschnitt (224, 234) an der Lippe (240) umfassen, wobei der vertiefte Abschnitt (224, 234) in der Höhenabmessung (H) im Vergleich zu den Eingriffskanten (223, 233, 241) zum Aufnehmen einer peripheren Schürze (154) eines Behälters (150) niedriger ist.

7. Greifer (200) nach einem der vorstehenden Ansprüche, wobei mindestens einer der Zinken (220, 230) ein austauschbares Kontaktglied (260) umfasst, das die Eingriffskante (263) umfasst.

8. Greifer (200) nach Anspruch 7, wobei das Kontaktglied (260) oder die Lippe (240) oder beide aus einem Polymerwerkstoff, insbesondere Polyethylen, hergestellt ist/sind.

9. Automatisiertes Lagersystem (100), umfassend:
- eine Einhausung (110), die eine Öffnung für den Zugang zur Einhausung (110) umfasst;
- eine Vielzahl von Behältern (150), die in der Einhausung (110) enthalten sind, zum Lagern von Gegenständen, wobei jeder Behälter (150) umfasst:
- eine Basis (151), die sich über eine Fläche erstreckt, die einen Mittelpunkt und eine imaginäre Mittelachse aufweist, die sich durch den Mittelpunkt erstreckt, und
- ein Gehäuse (152) mit einem unteren Ende, das mit der Basis (151) verbunden ist, und einem oberen Ende, das dem unteren Ende gegenüberliegt und eine Öffnung für den Zugriff zum Behälter (150) definiert, wobei sich das Gehäuse (152) von der Basis (151) in eine Richtung erstreckt, die eine Komponente parallel zu der Mittelachse aufweist,
- eine regallose Trägerstruktur (140), die in der Einhausung (110) enthalten ist, zum Lagern einer Vielzahl von Behältern (150), wobei die regallose Trägerstruktur (140) eine Vielzahl von Aufhängern (141) umfasst, die jeweils umfassen:
- einen Körper (142), der eine Höhe in einer ersten kartesischen Dimension (X), die zwischen einem oberen Ende und einem unteren Ende definiert ist, und eine Breite in einer zweiten kartesischen Dimension (Y) aufweist;
- eine Lippe (145), die konfiguriert ist, um in jeweilige Greifräume (156) der Vielzahl von Behältern (150) eingeführt zu werden, wobei sich die Lippe (145) vom oberen Ende des Körpers (142) oberhalb und in Richtung einer Seite davon erstreckt, und
- einen Roboter (160), der im Inneren der Einhausung (110) zum Bewegen der Behälter (150) zwischen der Öffnung und der Trägerstruktur (140) bereitgestellt ist, wobei der Roboter (160) einen Gelenkarm (162) mit einem distalen Ende umfasst,
wobei
- jeder Behälter (150) umfasst:
- einen Rand (153), der sich von dem zweiten Ende des Gehäuses (152) weg aus der Mittelachse erstreckt, und
- eine nach unten weisende Schürze (154), die sich aus dem Rand (153) erstreckt, wodurch ein Greifraum (156) zwischen dem Gehäuse (152), Rand (153) und Schürze (154) des Behälters (150) gebildet wird,
- jeder der Vielzahl von Aufhängern (141) eine Vielzahl von Kerben (148) umfasst, die an der Lippe (145) bereitgestellt sind, zum Aufnehmen jeweiliger Schürzen (154) der Vielzahl von Behältern (150), und wobei
- das automatisierte Lagersystem (100) einen Greifer (200) nach einem der vorstehenden Ansprüche umfasst, der zum Greifen eines der Vielzahl von Behältern (150) mit dem Greifraum (156) am distalen Ende des Gelenkarms (162) des Roboters (160) angeordnet ist.

10. Automatisiertes Lagersystem (100) nach Anspruch 9, wobei:
- das automatisierte Lagersystem (100) eine sich vertikal erstreckende Schiene (161) und einen Träger (163) umfasst, der beweglich an der Schiene (161) bereitgestellt ist, und wobei
- der Arm (162) des Roboters (160) an einem proximalen Ende am Träger (153) angebaut ist.

11. Automatisiertes Lagersystem (100) nach Anspruch 9 oder 10, wobei:
- die Einhausung (110) einen viereckigen Querschnitt aufweist;
- die Benutzeroberfläche (120) auf einer ersten Seite der Einhausung (110) bereitgestellt ist;
- der Roboter (120) auf einer zweiten Seite der Einhausung (110) gegenüber der ersten Seite bereitgestellt ist, und wobei
- eine erste solche Trägerstruktur (140) auf einer dritten Seite der Einhausung (110) bereitgestellt ist.

12. Automatisiertes Lagersystem (100) nach einem der vorstehenden Ansprüche 9 bis 11, wobei jeder der Vielzahl von Aufhängern (141) eine Schulter (143) zum Eingreifen in Gehäuse (152) der Vielzahl von Behältern (150) umfasst, wobei sich die Schulter (143) vom unteren Ende des Körpers (142) unterhalb und in Richtung einer Seite davon erstreckt.

13. Automatisiertes Lagersystem (100) nach einem der vorstehenden Ansprüche 9 bis 12, wobei der Behälter (150) im Allgemeinen prismatisch ist.

14. Automatisiertes Lagersystem (100) nach einem der vorstehenden Ansprüche 9 bis 13, wobei sich der Rand (153) und Schürze (154) um das gesamte obere Ende des Gehäuses (152) erstrecken.

## Revendications

1. Dispositif de préhension (200) pour un robot (160) d'un système de stockage automatisé (100), comprenant une fourche solitaire qui comprend :
- un corps (210) s'étendant entre deux extrémités opposées (211, 212),
- une première dent (220) et une seconde dent (230) fixées aux, s'étendant à partir des, deux extrémités opposées respectives (211, 212) du corps, et
- une lèvre (240), qui s'étend à partir du corps (210) entre la première dent (220) et la seconde dent (230),
dans lequel :
- la première dent (220), la seconde dent (230) et la lèvre (240) comprennent chacune un bord de mise en prise (223, 233, 241, 263) et dans lequel
- les bords de mise en prise (223, 233, 241, 263) forment une interface de préhension trilatérale,
dans lequel
- le dispositif de préhension (200) ne comprend aucune pièce mobile et dans lequel
- les bords de mise en prise (223, 233, 241, 263) sont alignés les uns avec les autres et s'étendent au-delà du corps (210) dans une dimension de hauteur (H), dans lequel l'interface de préhension trilatérale est configurée pour occuper un espace de préhension (156) formé sous un rebord (153) d'un récipient prismatique (150).

2. Dispositif de préhension (200) selon la revendication 1, dans lequel :
- les extrémités opposées (211, 212) du corps (210) comprennent une première extrémité (211) et une seconde extrémité (212), qui s'oppose à la première extrémité (211) le long d'une dimension transversale (T),
- la première dent (220) est fixée à, et s'étend à partir de, la première extrémité (211) du corps (210) le long d'une dimension longitudinale (L), qui est perpendiculaire à la dimension transversale (T),
- la seconde dent (230) est fixée à, et s'étend à partir de, la seconde extrémité (212) du corps (210) le long de la dimension longitudinale (L),
- un espace (250) de récipient est délimité par le corps (210), la première dent (220) et la seconde dent (230), et dans lequel
- la lèvre (240) est disposée entre la première extrémité (211) et la seconde extrémité (212) du corps (210), laquelle lèvre (240) s'étend à partir du corps (210) dans la dimension de hauteur (H), qui est perpendiculaire à la dimension longitudinale (L) et à la dimension transversale (T).

3. Dispositif de préhension (200) selon l'une quelconque des revendications précédentes, dans lequel l'espace de préhension (156) est défini par :
- un boîtier (152),
- un rebord (153), qui s'étend perpendiculairement à partir du boîtier (152), et par
- une jupe (154), qui s'étend perpendiculairement à partir du rebord (153) et parallèlement au boîtier (152).

4. Dispositif de préhension (200) selon l'une quelconque des revendications précédentes, dans lequel le dispositif de préhension (200) comprend une interface de fixation (213) fixée au corps (210) pour la fixation à un bras de robot.

5. Dispositif de préhension (200) selon l'une quelconque des revendications précédentes, dans lequel le dispositif de préhension (200) comprend :
- un premier écart transversal (242) entre la lèvre (240) et la première dent (220) et
- un second écart transversal (243) entre la lèvre (240) et la seconde dent (230).

6. Dispositif de préhension (200) selon l'une quelconque des revendications précédentes, dans lequel :
- la première dent (220) et la seconde dent (230) s'étendent toutes deux entre des extrémités avant (222, 232) et des extrémités arrière (221, 231) respectives,
- les extrémités arrière (221, 231) de la première dent (220) et de la seconde dent (230) comprennent toutes deux une section en retrait (224, 234) au niveau de la lèvre (240), laquelle section en retrait (224, 234) est plus basse dans la dimension de hauteur (H) par rapport aux bords de mise en prise (223, 233, 241) pour recevoir une jupe périphérique (154) d'un récipient (150).

7. Dispositif de préhension (200) selon l'une quelconque des revendications précédentes, dans lequel au moins l'une des dents (220, 230) comprend un élément de contact remplaçable (260) comprenant le bord de mise en prise (263).

8. Dispositif de préhension (200) selon la revendication 7, dans lequel l'élément de contact (260) ou la lèvre (240) ou les deux est/sont en un matériau polymère, notamment du polyéthylène.

9. Système de stockage automatisé (100) comprenant :
- une enceinte (110) comprenant un orifice pour accéder à l'enceinte (110) ;
- une pluralité de récipients (150) contenus dans l'enceinte (110) pour stocker des articles, chaque récipient (150) comprenant :
- une base (151) s'étendant sur une zone qui présente un point central et un axe central imaginaire s'étendant à travers le point central et
- un boîtier (152) avec une extrémité inférieure reliée à la base (151) et une extrémité supérieure opposée à l'extrémité inférieure et définissant une ouverture pour accéder au récipient (150), lequel boîtier (152) s'étend depuis la base (151) dans une direction présentant une composante parallèle à l'axe central,
- une structure de support sans étagère (140) contenue dans l'enceinte (110) pour stocker une pluralité de récipients (150), la structure de support sans étagère (140) comprenant une pluralité de dispositifs de suspension (141), qui comprennent chacun :
- un corps (142) présentant une hauteur dans une première dimension cartésienne (X) définie entre une extrémité supérieure et une extrémité inférieure et une largeur dans une seconde dimension cartésienne (Y) ;
- une lèvre (145) configurée pour être introduite dans des espaces de préhension respectifs (156) de la pluralité de récipients (150), la lèvre (145) s'étendant de l'extrémité supérieure du corps (142) au-dessus et vers un côté de celui-ci, et
- un robot (160) disposé à l'intérieur de l'enceinte (110) pour déplacer les récipients (150) entre l'orifice et la structure de support (140), le robot (160) comprenant un bras articulé (162) avec une extrémité distale,
dans lequel
- chaque récipient (150) comprend :
- un rebord (153), qui s'étend depuis la seconde extrémité du boîtier (152) en s'éloignant de l'axe central, et
- une jupe orientée vers le bas (154) qui s'étend depuis le rebord (153), selon lequel un espace de préhension (156) est formé entre le boîtier (152), le rebord (153) et la jupe (154) du récipient (150),
- chacun de la pluralité de dispositifs de suspension (141) comprend une pluralité d'encoches (148) disposées sur la lèvre (145) pour recevoir des jupes respectives (154) de la pluralité de récipients (150), et dans lequel
- le système de stockage automatisé (100) comprend un dispositif de préhension (200) conforme à l'une quelconque des revendications précédentes disposé à l'extrémité distale du bras articulé (162) du robot (160) pour saisir l'un de la pluralité de récipients (150) par l'espace de préhension (156).

10. Système de stockage automatisé (100) selon la revendication 9, dans lequel :
- le système de stockage automatisé (100) comprend un rail s'étendant verticalement (161) et un transporteur (163) disposé de manière mobile sur le rail (161), et dans lequel
- le bras (162) du robot (160) est fixé au niveau d'une extrémité proximale au transporteur (153).

11. Système de stockage automatisé (100) selon la revendication 9 ou 10, dans lequel :
- l'enceinte (110) présente une section transversale quadrilatérale ;
- l'interface utilisateur (120) est disposée sur un premier côté de l'enceinte (110) ;
- le robot (120) est disposé sur un deuxième côté de l'enceinte (110) opposé au premier côté, et dans lequel
- une première telle structure de support (140) est disposée sur un troisième côté de l'enceinte (110).

12. Système de stockage automatisé (100) selon l'une quelconque des revendications 9 à 11 précédentes, dans lequel chacun de la pluralité de dispositifs de suspension (141) comprend un épaulement (143) pour venir en prise avec des boîtiers (152) de la pluralité de récipients (150), l'épaulement (143) s'étendant de l'extrémité inférieure du corps (142) au-dessous et vers ledit côté de celui-ci.

13. Système de stockage automatisé (100) selon l'une quelconque des revendications 9 à 12 précédentes, dans lequel le récipient (150) est généralement prismatique.

14. Système de stockage automatisé (100) selon l'une quelconque des revendications 9 à 13 précédentes, dans lequel le rebord (153) et la jupe (154) s'étendent autour de toute l'extrémité supérieure du boîtier (152).
